# EUROPEAN PATENT SPECIFICATION

(11) **EP 3 206 315 B1**
(45) Date of publication and mention of the grant of the patent: **25.08.2021**
(21) Application number: 16155167.6
(22) Date of filing: 11.02.2016
(51) Int. Cl.: H04J 3/06, H04J 3/14

(54) **CLOCK SYNCHRONIZATION MONITORING IN AN ETHERNET-BASED NETWORK**
TAKTSYNCHRONISIERUNGSÜBERWACHUNG IN EINEM ETHERNETBASIERTEN NETZWERK
CONTRÔLE DE SYNCHRONISATION D'HORLOGE DANS UN RÉSEAU ETHERNET

(43) Date of publication of application: 16.08.2017
(73) Proprietor: Robert Bosch GmbH, 70442 Stuttgart (DE)
(72) Inventor: DIARRA, Aboubacar, 70469 Stuttgart-Feuerbach (DE)

(56) References cited:
- US-A1- 2014 281 037
- YASUYUKI KOZAKAI ET AL: "Keeping clock accuracy on a master clock failure in substation network", PRECISION CLOCK SYNCHRONIZATION FOR MEASUREMENT CONTROL AND COMMUNICATION (ISPCS), 2010 INTERNATIONAL IEEE SYMPOSIUM ON, IEEE, PISCATAWAY, NJ, USA, 27 September 2010 (2010-09-27), pages 25-29, XP031780883, ISBN: 978-1-4244-5978-0

## Description

The invention relates to a method for clock synchronization in a network, in particular an Ethernet-based in-vehicle time- and safety-critical network.

US 2014/0281037 A1 discloses a fault tolerant clock network in which a primary grand master sends messages according to a time protocol towards a network and a backup grand master, when active, sends messages according to the time protocol towards the network. These messages contain a primary synchronization signal and a backup synchronization signal respectively and may be received substantially simultaneously or within a certain time interval of each other. The backup grand master provides a seamless transition for a network device receiving these messages in a time sensistive network form in case of a failure to receive the primary synchronization signal from the primary grand master. The backup grand master may derive a local clock signal based on the primary synchronization signal. The primary synchronization signal is received in the messages according to the time protocol that are sent towards the network by the primary grand master. After the primary grand master recovered from a failure, the primary grand master may not start sending messages according to the time protocol but instead check synchronization to the backup grand master before beginning to send the messages according to the time protocol. To that end, the messages according to the time protocol that are sent by the backup grand master towards the network are used.

Keeping Clock Accuracy on a Master Clock Failure in Substation Network (Yasuyuki Kozakai et al, 2010 International IEEE Symposium, pages 25-29, ISBN:978-1-4244-5978-0) discloses an achritecture that makes slaves to receive messages from two grand master clocks, and the slave can always use both clock times of the grand master clocks to adjust a local time. In this architecture, an isolation of grand master clocks is implemented, where the grand master clocks send messages according to IEEE1588 standard but the grand master clocks do not receive any IEEE1588 messages from each other.

One challenge in designing a time sensitive system is the establishement of a common time base. The reason is that communicating devices in a network have different views of the current time, because they generally have different clock characteristics, for instance frequency drift, granularity, etc., and they often have different initial times. This situation leads to intolerable clock deviations in some automotive time- and safety-critical application, because these applications have strong requirements that aim to guarantee a safe car driving, particularly with respect to the whole traffic. Therefore, a strict time handling for in-vehicle networks is required. This is especially important for the interaction of several devices and/or devices within a car, because they all must rely on the same time. Therefore, a time synchronization mechanism is used across the whole network.

IEEE 802.1 AS time synchronization protocol has been specified for establishing a common time base in Ethernet-based networks. It basically works on a master clock acting as a time reference by distributing its timing information to other devices via the network such that they are able to correct and thus synchronize their internal clocks in order to be in conformity with the master clock.

In critical automotive applications, devices handling critical packets or messages must have a common sense of time to avoid any jitter, unexpected delay, and a wrong interpretation of the actual situation which otherwise could cause dramatic consequences on the vehicle behavior. Therefore, it is imperative that a common time base is established in an in-vehicle time and safety critical network at start up time as well as during running time.

However, the network is not protected against all sorts of errors that can negatively influence the clock synchronization. For some safety critical applications, for instance applications dedicated to autonomous or semi-automated driving, it is necessary that such errors are detected in order to prevent vehicles from any dangerous behavior. Therefore an enhanced clock synchronization mechanism in Ethernet-based in-vehicle networks is valuable.

The present invention provides an enhanced fault-tolerant clock synchronization mechanism in a network. This allows enhanced tolerance against faults which could negatively affect the system. Furthermore fault recovery time is further reduced.

The invention is defined by the features of the independent claims. The enhanced fault tolerant clock synchronization mechanism uses a first and a second master clock working simultaneously. Particularity a second master clock is used that is not a slave in this configuration and does not care and is not informed about any failure of the first master clock.

Preferred embodiments are defined in the dependent claims.

### Brief description of the drawings

Embodiments of the present invention are illustrated by way of example referencing the figures of the accompanying drawings, in which like references indicate similar elements and in which:
- Figure 1: shows an example of a part of an in-vehicle network;
- Figure 2: shows schematically message transmission between two grand masters for time synchronization;
- Figure 3: shows schematically message propagation for time synchronization in the in-vehicle network;
- Figure 4: shows a first example of synchronization message delivery at run time;
- Figure 5: shows a second example of synchronization message delivery at run time;
- Figure 6: shows the reduced recovery time achieved with the proposed fault-tolerant clock synchronization mechanism; and
- Figure 7: is a float chart of a time synchronization method.

In the following description, numerous specific details are introduced to provide a thorough understanding of, and enabling description for, embodiments of the suggested synchronization status monitoring mechanism. One skilled in the relevant art, however, will recognize that these embodiments can be practiced without one or more of the specific details, or with other components, systems, etc. In other instances, well known structures or operations are not shown or are not described in detail, to avoid obscuring aspects of the disclosed embodiments.

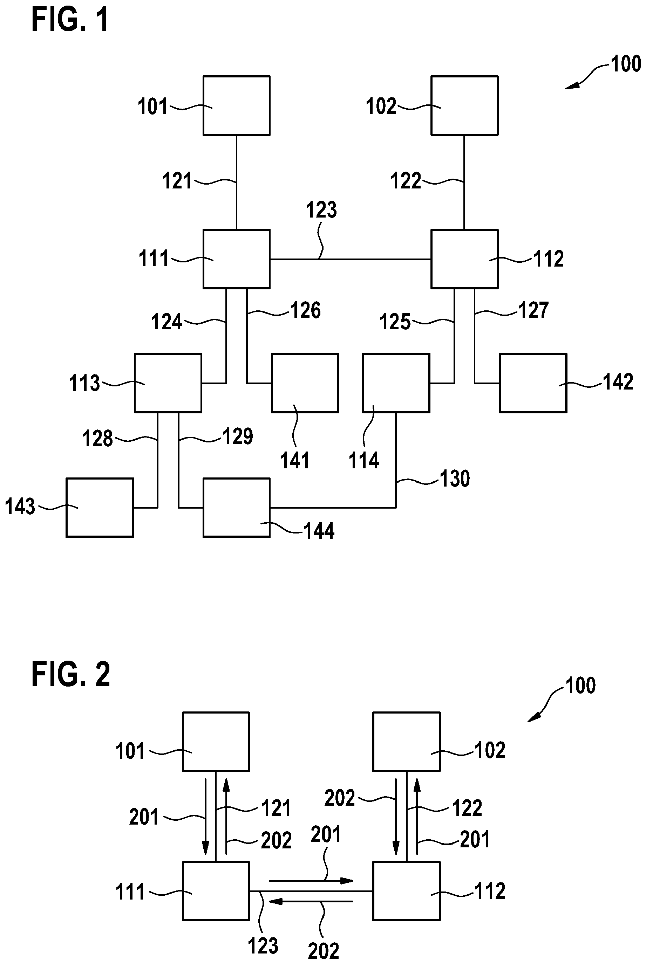

Figure 1 shows an example of an in-vehicle network 100. The in-vehicle network is for example based on a tree topology. Network 100 comprises a first master clock 101, referred to as first grand master below. Network 100 comprises a second master clock 102, referred to as second grand master below. Network 100 comprises a first bridge 111 connected to the first grand master 101 via a first data link 121. Network 100 comprises a second bridge 112 connected to the second grand master 102 via a second data link 122. A third data link 123 connects the first bridge 111 and the second bridge 112.

Network 100 comprises a third bridge 113 connected to the first bridge 111 via a fourth data link 124. Network 100 comprises a fourth bridge 114 connected to the second bridge 112 via a fifth data link 125.

Network 100 comprises a first device 141 connected via a sixth data link 126 to the first bridge 111. and/or switch nodes 3, 4, 5, a master clock 6 and devices 7, 8, 9. Network 100 comprises a second device 142 connected via a seventh data link 127 to the second bridge 112. Network 100 comprises a third device 143 connected via an eighth data link 128 to the third bridge 113. Network 100 comprises a fourth device 144 connected via a ninth data link 129 to the third bridge 113. A tenth data link 130 connects the fourth device 144 and the fourth bridge 114.

Anyone of devices 141, 142, 143, 144 is assumed to be a sender of critical data. In some embodiments, the first grand master 101 or the second grand master 102 is considered to be also a receiver of critical data.

The devices 141, 142, 143, 144 operate for example as slaves according to the IEEE 802.1 AS time synchronization protocol. Devices 141, 142, 143, 144 correspond for example to electronic control units cooperating to implement complex safety-critical vehicle functions or to sensors devices cooperating to send safety-critical data.

A fault-tolerant clock synchronization using the first grand master 101 and the second grand master 102 is explained below referencing figures 2 to 7.

The first grand master 101 and the second grand master 102 implement for example the IEEE 802.1 AS time synchronization protocol. According to the example they work simultaneously. The particularity is that the second grand master 102 is not a slave in this configuration. The second grand master 102 works independent of any failure of the first grand master 101 and preferably does not receive information about any failure of the first grand master 101. Thereby an operation mode is implemented to reduce recovery time of the clock synchronization at start-up of the Network, or after a fault occurred.

Referencing figure 2, a method for establishing a common time base between the first grand master 101 and the second grand master 102 is explained. The method starts for example at start-up of network 100.

Figure 2 depicts a part of the network 100 of figure 1 including the first grand master 101, the second grand master 102, the first bridge 111, the second bridge 112 and the data links 121, 122, 123 connecting them as described for figure 1.

The time synchronization process operates with specific messages. To achieve time synchronization a grand master to grand master clock correction is described below.

The first grand master 101 sends a first message 201, "SYNC1". The first bridge 111 and the second bridge 112 forward this first message 201 to the second grand master 102.

The second grand master 102 sends a second message 202, "SYNC2". The second bridge 112 and the first bridge 111 forward this second message 202 to the first grand master 101.

Once the synchronization between the first grand master 101 and the second grand master 102 is achieved synchronized time information is available for synchronizing a clock of a clock slave node. Then the first grand master 101 sends a third message 203, "sync1 ". Once the synchronization between the first grand master 101 and the second grand master 102 is achieved, the second grand master 102 sends a fourth message 204, "sync2". The third message 203 and the fourth message 204 are sent independently towards the network 100. The third message 203, "sync1" and the fourth message 204, "sync2" are sent repeatedly, preferably cyclically. The first message 201, "SYNC1" and the second message 202, "SYNC2" are preferably sent only once. They are sent repeatedly, preferably cyclically for a predetermined time. This provides fault-tolerance.

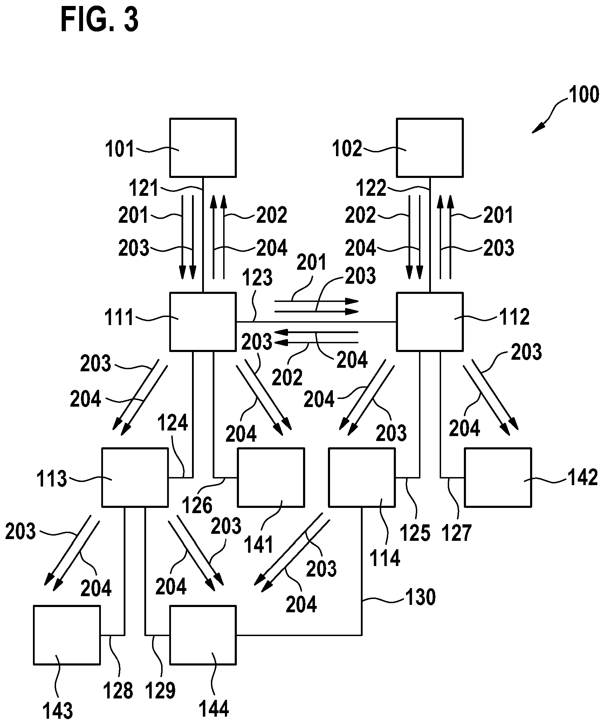

The propagation of the messages in the network 100 is schematically depicted in figure 3 using the same reference signs as in figures 1 and 2 for the same elements.

After the time synchronization, the second grand master 102 uses the third message 203, "sync1" to correct its clock in conformity with the reference time.

After the time synchronization, the first grand master 101 uses the fourth message 204, "sync2" to correct its clock in conformity with the reference time.

At network start-up without any clock correction mechanism, C8M1 (t) and C8M2(t) are respectively the clock timing values indicated by the first grand master 101 and the second grand master 102 at the same point in time t respectively.

Without time synchronization clock timing values C8M1 (t) and C8 M2 (t) are different.

The time synchronization, i.e. the first message 201, "SYNC1" and the second message 202, "SYNC2", are used to send the synchronize clock timing values C8M1 (t) and C8 M2 (t) respectively. Using the received synchronize clock timing values C8M1 (t) and C8 M2(t) the internal clocks of the first grand master 101 and the second grand master 102 are modified to indicate the same time value. Preferably the average value Cmiddle (t) of the clock timing values C8M1 (t) and C8 M2 (t) is used at any given point in time t. alternatively either one of the synchronize clock timing values C8M1 (t) and C8 M2 (t) may be used.

As describe above, after the grand master clock correction is performed, third messages, "sync1", and fourth messages, "sync2", are sent into the network 100.

As illustrated in Figure 3, each slave node, i.e. each device 141, 142, 143, 144, receives two different "sync" messages. Preferably they use only one of the two messages to correct their clocks.

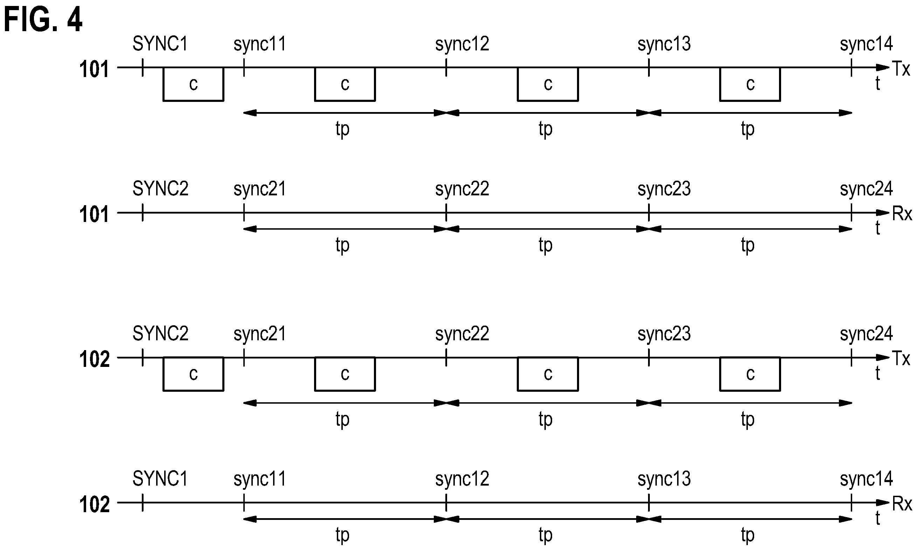

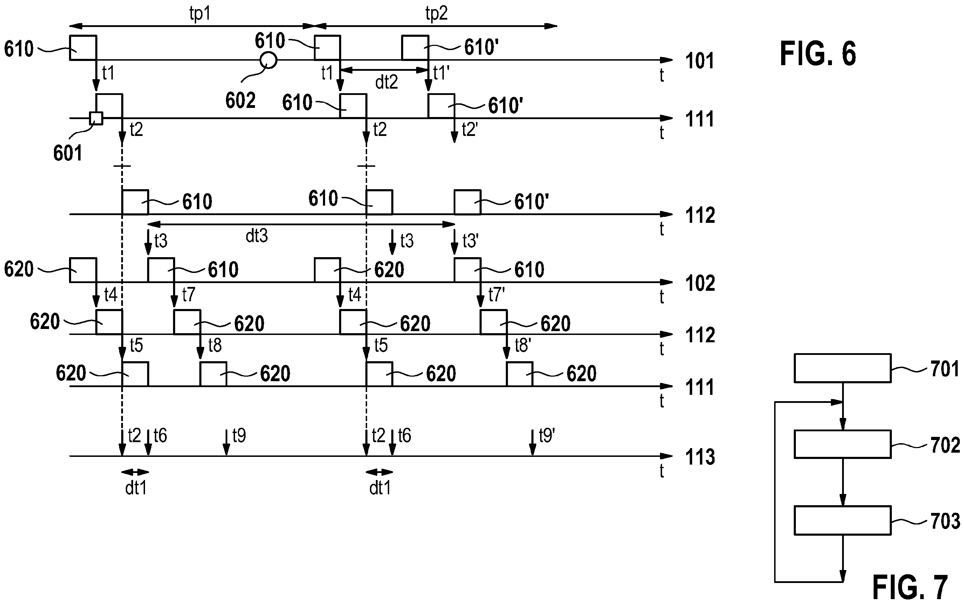

As depicted in figure 4 and according to the flowchart of figure 7, in a first step 701, first message 201, "SYNC1", and second message 202, "SYNC2", are exchanged. They are only exchanged between the first grand master 101 and the second grand master 102. These messages are exchanged preferably at start-up of network 100.

After that in a step 702, the third message 203, "sync1" and the fourth message 204, "sync2" are sent.

After that in a step 703, a clock correction c is performed with time synchronization information of the received third message 203, "sync1" or the received fourth message 204, "sync2".

Steps 702 and 703 are performed repeatedly, preferably cyclically.

This means in a cycle i the third messages 203, "sync1i", and the fourth messages 204, "sync2i", are periodically transmitted and accessible by all timesensitive devices in the network 100.

In figure 4, a sequence of messages over time t is depicted for sending of messages, labelled Tx, and receiving of messages, labelled Rx for the first grand master 101 and the second grand master 102 respectively. The time period tp between the repeated sending of the respective third message 203, "sync1i" and the fourth message 204, "sync2i" indicates a "sync" interval. In figure 4, a sequence of four of the first messages 201, "sync1i" and four of the second messages 202, "sync2i" is depicted.

Clock correction c is performed repeatedly as well. Preferably the clock correction c is performed within the "sync" interval. Clock correction c is for example triggered at the receipt of a "sync" message or after a "sync" message was sent, and finished before the next "sync" message is received or sent.

It is to be noted that a higher time synchronization frequency results in more accurate time synchronization.

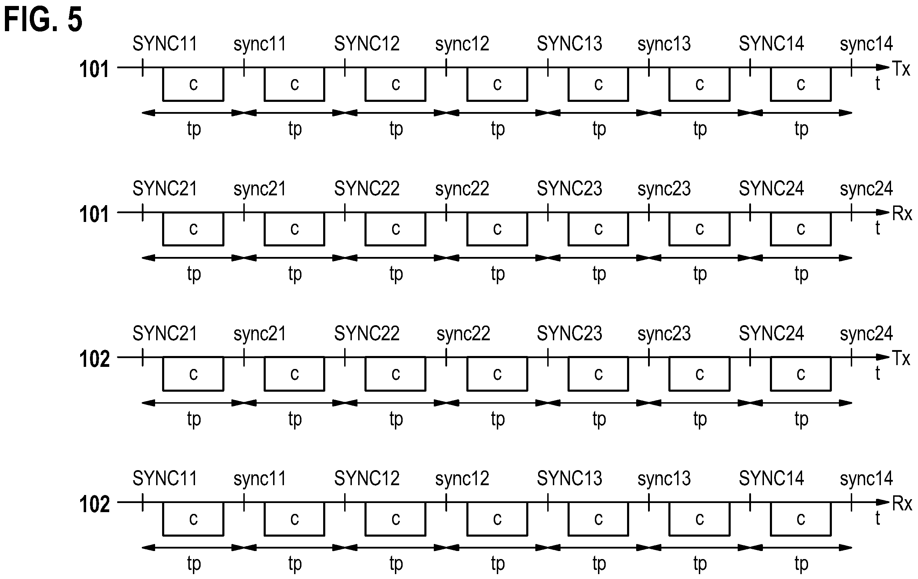

Figure 5 depicts another example of messaging for synchronizing. The same reference signs used in figure 4 are used in figure 5 for identical elements.

Preferably the third message 203, "sync1" and the fourth message 204, "sync2" are delivered towards all time aware devices in the network 100.

Preferably the first message 201, "SYNC1" or the second message 202, "SYNC2" are delivered only on the data links 121, 122, and 123 connecting them. In the example in Figure 5, the first message 201, "SYNC1" and the second message 202, "SYNC2" are repeated. This means in a cycle j the first message 201, "SYNC1j" and the second message 202, "SYNC2j" are repeated. Preferably they are periodically transmitted.

Accordingly time synchronization messages between the first grand master 101 and the second grand master 102 is repeated, e.g. two times more frequent than the time synchronization for the other time aware devices.

System designers have also the possibility to synchronize the first grand master 101 and the second grand master 102 more frequently.

The first bridge 111 or the second bridge 112 that are located on the paths connecting the first grand master 101 and the second grand master 102 may also have the same synchronization frequency as these. This means, the sub-network comprising the first grand master 101 and the second grand master 102 and the bridges 111, 112 located between them can be denoted as highly synchronized sub-network.

This way the recovery time of the fault-tolerant clock synchronization mechanism is improved.

The network is preferably an Ethernet-based in-vehicle time-and-safety critical network. The advantages of the enhanced time synchronization is described below referencing figure 6 and the network topology example of in figure 3. The same reference signs as used in previous figures are used for like elements in figure 6. In the following the third message 203 or the fourth message 204 are referred to as "sync" frame as well. A "sync" frame is for example a corresponding Ethernet frame.

Figure 6 describes sending of messages over time t from the first grand master 101 or the second grand master 102 to the first bridge 111, the second bridge 112 and the third bridge 113 respectively.

As depicted in figure 6, any of the first bridge 111, the second bridge 112 and the third bridge 113, referred to as node below, can suffer from reference time unavailability because the first grand master 101 is disconnected from the network 100, is not working correctly or because synchronization messages are lost or corrupted.

Figure 6 depicts two "sync" intervals tp1 and tp2. Preferably tp1 = tp2.

Without failure, assuming cyclic transmission, the transmission times are the same with respect to different "sync" intervals tp.

In a first example, in a first event 601 a synchronization message, e.g. a "sync" frame, is lost between the first bridge 111 and the third bridge 113. In a second example in a second event 602 the first grand master 101 fails, e.g. temporarily.

To illustrate the reactivity of different clock synchronization approaches for the first and second example, the third bridge 113 is taken as target device, i.e. slave node with respect to clock synchronization.

To allow clock synchronization at the slave node, another "sync" frame originating from the second grand master 102 is transmitted to the slave node, i.e. in the example the third bridge 113.

The sooner this other "sync" frame arrives at the second bridge 112, and hence at the target device, e.g. the third bridge 113, the faster the clock synchronization can be performed or the slower will the time synchronization error increase.

According to the first and second example, the second grand master 102 is adapted to transmit the frame 620 after the corresponding frame 610 is received in the same "sync" interval.

Without failure, the frame 610 containing third message 203, "sync1 i" is transmitted at t=t1 by the first grand master 101 to the first bridge 111. The frame 610 is then transmitted from the first bridge 111 to the second bridge 112 and the third bridge 113 at t=t2. The frame 610 is then transmitted from the second bridge 112 to the second grand master 102 at t=t3. The corresponding transmission is depicted in figure 6.

Without failure, the frame 620 containing fourth message 204, "sync2i" is transmitted by the second grand master 102 to the second bridge 112 at t=t4. The frame 620 is transmitted by the second bridge 112 to the first bridge 111 at t=t5. The frame 620 is transmitted by the first bridge 111 to the third bridge 113 and the first grand master 101 at t=t6. The corresponding transmission is depicted in figure 6.

The difference between the transmission of frame 610 and frame 620 to the third bridge 113 is dt1 = t6-t2.

In the first example depicted in figure 6, a "sync" frame originated at the first grand master 101 is lost or corrupted during forwarding between the first bridge 111 the third bridge 113 in event 601. Therefore the third bridge 113 does not have the opportunity to correct its local clock with that "sync" frame.

In the first example, the first frame 610 from the first grand master 101 is received on the second grand master 102 at t=t3. Then a corresponding second frame 620 is transmitted by the second grand master 102 to the second bridge 112 at t=t7. Then the second frame 620 is transmitted by the second bridge 112 to the first bridge 111 at t=t8. Then the second frame 620 is transmitted by the first bridge 111 to the third bridge 113 at t=t9. The corresponding transmission is depicted in figure 6.

Likewise the second frame 620 may be transmitted by the second bridge 112 to the fourth bridge 114 at t=t8. Then the second frame 620 is transmitted by the fourth bridge 114 to the third bridge 113 at t=t9. This is not depicted in figure 6.

In any case t=t9 is a time before the next regular transmission of a first frame 610 is expected to arrive in the next "sync" interval. Therefore the time synchronization recovers faster with updated time synchronization information from the second grand master 102.

In the second example, as depicted in figure 6, in the first "sync" interval tp1 a timeout event 602 occurs in the first grand master 101. Caused by this, in the second "sync" interval tp2, a timeout dt2 occurs. The timeout is the delay between the time for transmission of the frame 610 at t=t1 in the second "sync" interval tp2 and actual sending of a frame 610' at a later time t=t1'. At t=t1 the frame 610' is transmitted by the first grand master 101 to the first bridge 111. The frame 610' is then transmitted from the first bridge 111 to the second bridge 112 and the third bridge 113 at t=t2'. The frame 610' is then transmitted from the second bridge 112 to the second grand master 102 at t=t3'. The corresponding transmission is depicted in figure 6.

This results in a delay dt3 between transmission of frame 620 from the second grand master 102 in the first "sync" interval tp1 and the second "sync" interval tp2. The delay dt3 is larger than the "sync" interval tp1. Consequently the in second "sync" interval tp2 the time t3' is a time later than the time t3 the next frame 610 was expected.

However, the second grand master 102 is adapted to transmit the second frame 620 at t=t4 in the first "sync" interval tp1 to the second bridge 102. Then the second frame 620 is transmitted by the second bridge 112 to the first bridge 111 at t=t5. Then the second frame 620 is transmitted by the first bridge 111 to the third bridge 113 at t=t6. The corresponding transmission is depicted in figure 6.

In this case t=t6 is a time in the second "sync" interval tp2 before the delayed frame 610' is transmitted to the third bridge 113 in the second "sync" interval tp2. Therefore the time synchronization recovers faster with updated time synchronization information from the second grand master 102.

In a third example, that enhances the time synchronization further, the second grand master 102 does not wait for any "sync" message from the first grand master 101 before transmitting the second frame 620. This third example can be applied to modify the second grand master 102 of the first and second example.

According to the third example the second grand master 102 sends the second frame 620 earlier, e.g. at the same time, as the first frame 610 is sent by the first grand master 101. Then the second bridge 112 receives the second frame 620 from the second grand master 102 earlier than described for the first or second example.

Preferably the time of sending of the second frame 620 by the second grand master 102 is configured to be any different time between the time of sending of the first frame 610 by the first grand master 101 and the expected time of arrival of the first frame 610 at the target node, e.g. the third bridge 113 as well..

## Claims

1. Method for clock synchronization in a network (100), comprising
- sending, by a first clock master (101), a first message (201) addressed to a second clock master (102);
- sending, by the second clock master (102), a second message (202) addressed to the first clock master (102);
- sending, by the first clock master (101), a third message (203, 610) addressed to at least one clock slave node (111, 112, 113, 114, 141, 142, 143, 144) in the network (100) and the second clock master (102);
- sending, by the second clock master (102) a fourth message (204, 620) addressed to the at least one clock slave node (111, 112, 113, 114, 141, 142, 143, 144) in the network (100) and the first clock master (101);
wherein the third message (203, 610) and the fourth message (204, 620) contain synchronized time information for synchronizing a clock of the at least one clock slave node (111, 112, 113, 114, 141, 142, 143, 144); **characterized in that**
the first message (201) and the second message (202) contain respective clock timing valules (C8M1(t), C8M2 (t)), indicated respectively by the first clock master (101) and the second clock master (102) at a point in time (t);
wherein the first message (201) and the second message (202) are sent repeatedly and are only exchanged between the first clock master (101) and the second clock master (102).

2. Method of claim 1, **characterized in that** the third message (203, 610) and the fourth message (620) are sent at a first predetermined time (t1, t1') and a second predetermined time (t4, t7, t7') respectively.

3. Method of claim 2, **characterized in that** the third message (203, 610) is received at the second clock master (102) at a third time (t3, t3') after the first predetermined time (t1, t1') and the fourth message (204, 620) is sent by the second clock master (102) at the second predetermined time (t4, t4') after the receipt of the third message (203, 610) at the second clock master (102).

4. Method of anyone of the preceding claims, **characterized in that** the third message (203) is configured for synchronizing the clocks of the slave node (111, 112, 113, 114, 141, 142, 143, 144) to the first clock master (101).

5. Method of claim 4, **characterized in that** the fourth message (204) is configured for synchronizing the clocks of the slave node (111, 112, 113, 114, 141, 142, 143, 144) to the second clock master (102).

6. Method of anyone of the preceding claims, **characterized in that** the messages (201, 202, 203, 204, 610, 620) are sent at a given transmission frequency.

7. Method of anyone of the preceding claims, wherein the messages (201, 202, 203, 204, 610, 620) are transmitted in Ethernet frames.

8. A system for clock synchronization in a network (100), comprising:
- a first clock master (101) comprising means for sending a first message (201) addressed to a second clock master (102);
- the second clock master (102) comprising means for sending a second message (202) addressed to the first clock master (102);
- the first clock master (101) comprising means for sending a third message (203, 610) addressed to at least one clock slave node (111, 112, 113, 114, 141, 142, 143, 144) in the network (100);
- the second clock master (102) comprising means for sending a fourth message (204, 620) addressed to the at least one clock slave node (111, 112, 113, 114, 141, 142, 143, 144) in the network (100);
wherein the third message (203, 610) and the fourth message (204, 620) contain synchronized time information for synchronizing a clock of the at least one clock slave node (111, 112, 113, 114, 141, 142, 143, 144);
the system **characterized in that**
the first message (201) and the second message (202) contain respective clock timing valules (C8M1(t), C8M2 (t)), indicated respectively by the first clock master (101) and the second clock master (102) at a point in time (t);
wherein the first message (201) and the second message (202) are sent repeatedly and are only exchanged between the first clock master (101) and the second clock master (102).

9. The system of claim 8, **characterized in that** the system comprises a bridge node (111, 112, 113, 114) for forwarding messages (201, 201, 203, 204, 610, 620) received from the first clock master (101) or the second clock master (102).

10. The system of claim 8 or 9, **characterized in that** the system comprises a clock slave node (111, 112, 113, 114, 141, 142, 143, 144) configured for receiving the third message (203, 610) or the fourth message (204, 620), and configured for synchronizing its internal clock depending on the time information.

11. The system of any of claims 8 to 10, **characterized by** further comprising means for executing a method according to anyone of claims 2 to 7.

12. A computer readable medium comprising computer executable instructions which, when executed by a computer, cause the computer to carry out the method of anyone of claims 1 to 7.

## Patentansprüche

1. Verfahren für eine Taktsynchronisation in einem Netz (100), das Folgendes umfasst:
- Senden durch einen ersten Takt-Master (101) einer ersten Nachricht (201), die an einen zweiten Takt-Master (102) adressiert ist;
- Senden durch den zweiten Takt-Master (102) einer zweiten Nachricht (202), die an den ersten Takt-Master (102) adressiert ist;
- Senden durch den ersten Takt-Master (101) einer dritten Nachricht (203, 610), die an mindestens einen Takt-Slave-Knoten (111, 112, 113, 114, 141, 142, 143, 144) in dem Netz (100) und den zweiten Takt-Master (102) adressiert ist;
- Senden durch den zweiten Takt-Master (102) einer vierten Nachricht (204, 620), die an den mindestens einen Takt-Slave-Knoten (111, 112, 113, 114, 141, 142, 143, 144) in dem Netz (100) und den ersten Takt-Master (101) adressiert ist;
wobei die dritte Nachricht (203, 610) und die vierte Nachricht (204, 620) synchronisierte Zeitinformationen zum Synchronisieren eines Takts des mindestens einen Takt-Slave-Knotens (111, 112, 113, 114, 141, 142, 143, 144) enthalten; **dadurch gekennzeichnet, dass**
die erste Nachricht (201) und die zweite Nachricht (202) jeweilige Taktzeitvorgabewerte (C8M1(t), C8M2(t)) enthalten, die jeweils durch den ersten Takt-Master (101) und den zweiten Takt-Master (102) zu einem Zeitpunkt (t) angegeben werden;
wobei die erste Nachricht (201) und die zweite Nachricht (202) wiederholt gesendet werden und nur zwischen dem ersten Takt-Master (101) und dem zweiten Takt-Master (102) ausgetauscht werden.

2. Verfahren nach Anspruch 1, **dadurch gekennzeichnet, dass** die dritte Nachricht (203, 610) und die vierte Nachricht (620) jeweils zu einem ersten vorgegebenen Zeitpunkt (t1, t1') und einem zweiten vorgegebenen Zeitpunkt (t4, t7, t7') gesendet werden.

3. Verfahren nach Anspruch 2, **dadurch gekennzeichnet, dass** die dritte Nachricht (203, 610) an dem zweiten Takt-Master (102) zu einem dritten Zeitpunkt (t3, t3') nach dem ersten vorgegebenen Zeitpunkt (t1, t1') empfangen wird und die vierte Nachricht (204, 620) durch den zweiten Takt-Master (102) zu dem zweiten vorgegebenen Zeitpunkt (t4, t4') nach dem Empfang der dritten Nachricht (203, 610) an dem zweiten Takt-Master (102) gesendet wird.

4. Verfahren nach einem der vorhergehenden Ansprüche, **dadurch gekennzeichnet, dass** die dritte Nachricht (203) zum Synchronisieren der Takte des Slave-Knotens (111, 112, 113, 114, 141, 142, 143, 144) mit dem ersten Takt-Master (101) konfiguriert ist.

5. Verfahren nach Anspruch 4, **dadurch gekennzeichnet, dass** die vierte Nachricht (204) zum Synchronisieren der Takte der Slave-Knoten (111, 112, 113, 114, 141, 142, 143, 144) mit dem zweiten Takt-Master (102) konfiguriert ist.

6. Verfahren nach einem der vorhergehenden Ansprüche, **dadurch gekennzeichnet, dass** die Nachrichten (201, 202, 203, 204, 610, 620) mit einer gegebenen Übertragungsfrequenz gesendet werden.

7. Verfahren nach einem der vorhergehenden Ansprüche, wobei die Nachrichten (201, 202, 203, 204, 610, 620) in Ethernet-Rahmen gesendet werden.

8. System für eine Taktsynchronisation in einem Netz (100), das Folgendes umfasst:
- einen ersten Takt-Master (101), der Mittel zum Senden einer ersten Nachricht (201), die an einen zweiten Takt-Master (102) adressiert ist, umfasst;
- wobei der zweite Takt-Master (102) Mittel zum Senden einer zweiten Nachricht (202), die an den ersten Takt-Master (102) adressiert ist, umfasst;
- wobei der erste Takt-Master (101) Mittel zum Senden einer dritten Nachricht (203, 610), die an mindestens einen Takt-Slave-Knoten (111, 112, 113, 114, 141, 142, 143, 144) in dem Netz (100) adressiert ist, umfasst;
- wobei der zweite Takt-Master (102) Mittel zum Senden einer vierten Nachricht (204, 620), die an den mindestens einen Takt-Slave-Knoten (111, 112, 113, 114, 141, 142, 143, 144) in dem Netz (100) adressiert ist, umfasst;
wobei die dritte Nachricht (203, 610) und die vierte Nachricht (204, 620) synchronisierte Zeitinformationen zum Synchronisieren eines Takts des mindestens einen Takt-Slave-Knotens (111, 112, 113, 114, 141, 142, 143, 144) enthalten;
wobei das System **dadurch gekennzeichnet, dass** die erste Nachricht (201) und die zweite Nachricht (202) jeweilige Taktzeitvorgabewerte (C8M1(t), C8M2(t)) enthalten, die jeweils durch den ersten Takt-Master (101) und den zweiten Takt-Master (102) zu einem Zeitpunkt (t) angegeben werden;
wobei die erste Nachricht (201) und die zweite Nachricht (202) wiederholt gesendet werden und nur zwischen dem ersten Takt-Master (101) und dem zweiten Takt-Master (102) ausgetauscht werden.

9. System nach Anspruch 8, **dadurch gekennzeichnet, dass** das System einen Brückenknoten (111, 112, 113, 114) zum Weiterleiten der von dem ersten Takt-Master (101) oder dem zweiten Takt-Master (102) empfangenen Nachrichten (201, 201, 203, 204, 610, 620) umfasst.

10. System nach Anspruch 8 oder 9, **dadurch gekennzeichnet, dass** das System einen Takt-Slave-Knoten (111, 112, 113, 114, 141, 142, 143, 144) umfasst, der zum Empfangen der dritten Nachricht (203, 610) oder der vierten Nachricht (204, 620) konfiguriert ist und zum Synchronisieren seines internen Takts abhängig von den Zeitinformationen konfiguriert ist.

11. System nach einem der Ansprüche 8 bis 10, **dadurch gekennzeichnet, dass** es ferner Mittel zum Ausführen eines Verfahrens nach einem der Ansprüche 2 bis 7 umfasst.

12. Computerlesbares Medium, das computerausführbare Anweisungen umfasst, die dann, wenn sie durch einen Computer ausgeführt werden, bewirken, dass der Computer das Verfahren nach einem der Ansprüche 1 bis 7 ausführt.

## Revendications

1. Procédé pour la synchronisation des horloges dans un réseau (100), comprenant
- l'envoi, par un premier maître d'horloge (101), d'un premier message (201) adressé à un deuxième maître d'horloge (102) ;
- l'envoi, par le deuxième maître d'horloge (102), d'un deuxième message (202) adressé au premier maître d'horloge (102) ;
- l'envoi, par le premier maître d'horloge (101), d'un troisième message (203, 610) adressé à au moins un nœud esclave d'horloge (111, 112, 113, 114, 141, 142, 143, 144) dans le réseau (100) et au deuxième maître d'horloge (102) ;
- l'envoi, par le deuxième maître d'horloge (102), d'un quatrième message (204, 620) adressé à l'au moins un nœud esclave d'horloge (111, 112, 113, 114, 141, 142, 143, 144) dans le réseau (100) et au premier maître d'horloge (101) ;
le troisième message (203, 610) et le quatrième message (204, 620) contenant des informations de temps synchronisé pour synchroniser une horloge de l'au moins un nœud esclave d'horloge (111, 112, 113, 114, 141, 142, 143, 144) ; **caractérisé en ce que**
le premier message (201) et le deuxième message (202) contiennent des valeurs de rythme d'horloge respectives (C8M1(t), C8M2(t)), indiquées respectivement par le premier maître d'horloge (101) et le deuxième maître d'horloge (102) à un moment donné (t) ;
le premier message (201) et le deuxième message (202) étant envoyés de façon répétée et étant échangés seulement entre le premier maître d'horloge (101) et le deuxième maître d'horloge (102).

2. Procédé selon la revendication 1, **caractérisé en ce que** le troisième message (203, 610) et le quatrième message (620) sont envoyés à un premier moment prédéterminé (t1, t1') et à un deuxième moment prédéterminé (t4, t7, t7') respectivement.

3. Procédé selon la revendication 2, **caractérisé en ce que** le troisième message (203, 610) est reçu au niveau du deuxième maître d'horloge (102) à un troisième moment (t3, t3') après le premier moment déterminé (t1, t1') et le quatrième message (204, 620) est envoyé par le deuxième maître d'horloge (102) au deuxième moment prédéterminé (t4, t4') après la réception du troisième message (203, 610) au niveau du deuxième maître d'horloge (102).

4. Procédé selon l'une quelconque des revendications précédentes, **caractérisé en ce que** le troisième message (203) est configuré de façon à synchroniser les horloges du nœud esclave (111, 112, 113, 114, 141, 142, 143, 144) sur le premier maître d'horloge (101).

5. Procédé selon la revendication 4, **caractérisé en ce que** le quatrième message (204) est configuré de façon à synchroniser les horloges du nœud esclave (111, 112, 113, 114, 141, 142, 143, 144) sur le deuxième maître d'horloge (102) .

6. Procédé selon l'une quelconque des revendications précédentes, **caractérisé en ce que** les messages (201, 202, 203, 204, 610, 620) sont envoyés à une fréquence de transmission donnée.

7. Procédé selon l'une quelconque des revendications précédentes, dans lequel les messages (201, 202, 203, 204, 610, 620) sont transmis dans des trames Ethernet.

8. Système pour la synchronisation des horloges dans un réseau (100), comprenant :
- un premier maître d'horloge (101), comprenant des moyens pour envoyer un premier message (201) adressé à un deuxième maître d'horloge (102) ;
- un deuxième maître d'horloge (102), comprenant des moyens pour envoyer un deuxième message (202) adressé au premier maître d'horloge (102) ;
- le premier maître d'horloge (101) comprenant des moyens pour envoyer un troisième message (203, 610) adressé à au moins un nœud esclave d'horloge (111, 112, 113, 114, 141, 142, 143, 144) dans le réseau (100) ;
- le deuxième maître d'horloge (102) comprenant des moyens pour envoyer un quatrième message (204, 620) adressé à l'au moins un nœud esclave d'horloge (111, 112, 113, 114, 141, 142, 143, 144) dans le réseau (100) ;
le troisième message (203, 610) et le quatrième message (204, 620) contenant des informations de temps synchronisé pour synchroniser une horloge de l'au moins un nœud esclave d'horloge (111, 112, 113, 114, 141, 142, 143, 144) ;
ce système étant **caractérisé en ce que** le premier message (201) et le deuxième message (202) contiennent des valeurs de rythme d'horloge (C8M1(t), C8M2(t)), indiquées respectivement par le premier maître d'horloge (101) et le deuxième maître d'horloge (102) à un moment donné (t) ;
le premier message (201) et le deuxième message (202) étant envoyés de façon répétée et étant échangés seulement entre le premier maître d'horloge (101) et le deuxième maître d'horloge (102).

9. Système selon la revendication 8, **caractérisé en ce que** le système comporte un nœud pont (111, 112, 113, 114) pour réacheminer les messages (201, 201, 203, 204, 610, 620) reçus du premier maître d'horloge (101) ou du deuxième maître d'horloge (102).

10. Système selon la revendication 8 ou 9, **caractérisé en ce que** ce système comporte un nœud esclave d'horloge (111, 112, 113, 114, 141, 142, 143, 144) configuré de façon à recevoir le troisième message (203, 610) ou le quatrième message (204, 620), et configuré de façon à synchroniser son horloge interne selon les informations temporelles.

11. Système selon l'une quelconque des revendications 8 à 10, **caractérisé en outre en ce qu'**il comporte des moyens pour exécuter un procédé selon l'une quelconque des revendications 2 à 7.

12. Support lisible par ordinateur comprenant des instructions exécutables qui, lorsqu'elles sont exécutées par un ordinateur, effectuent le procédé selon l'une quelconque des revendications 1 à 7.
